# EUROPÄISCHE PATENTANMELDUNG

(11) **EP 4 708 574 A1**
(43) Veröffentlichungstag der Anmeldung: **11.03.2026**
(21) Anmeldenummer: 24198792.4
(22) Anmeldetag: 06.09.2024
(51) Int. Cl.: H01R 4/30, H01R 4/34, H01R 4/44, H01R 4/70, H01R 11/26, H01M 50/502, H02G 3/00, H01R 11/12

(54) **ELEKTRISCHER STECKVERBINDER, ELEKTRISCHE STECKVERBINDUNG UND ELEKTRISCHE STECKVERBINDERANORDNUNG**

(71) Anmelder: Rosenberger Hochfrequenztechnik GmbH & Co. KG, 83413 Fridolfing (DE)
(72) Erfinder: Gruber, Andreas, 83413 Fridolfing (DE); Benning, Markus, 83413 Fridolfing (DE)
(74) Vertreter: Lorenz & Kollegen

(57) **Zusammenfassung**

Die vorliegende Erfindung betrifft einen elektrischen Steckverbinder. Die vorliegende Erfindung betrifft ferner eine elektrische Steckverbindung. Die vorliegende Erfindung betrifft schließlich eine elektrische Steckverbinderanordnung.

Ein elektrischer Steckverbinder (5; 5') zum elektrischen und mechanischen Verbinden mit einem zugehörigen elektrischen Gegensteckverbinder (7) weist ein elektrisch isolierendes Gehäuse (11), ein Kontaktelement (9) und eine Befestigungsanordnung zur Befestigung des Kontaktelements (9) mit einem Gegenkontaktelement (32) des Gegensteckverbinders (7) auf. Die Befestigungsanordnung ist als eine Schraubanordnung (15; 15') ausgebildet, um das Kontaktelement (9) mit dem Gegenkontaktelement (32) in einer Schraubrichtung zu befestigen, die winklig, vorzugsweise orthogonal, zu einer Steckrichtung des Steckverbinders (5; 5') gerichtet ist. Die Schraubanordnung (15; 15') weist ein Schraubmittel (16), welches in das Gehäuse (11) in der Schraubrichtung einführbar ist, und ein im Gehäuse (11) angeordnetes und mit dem Schraubmittel (16) verschraubbares Gegenschraubmittel (17) auf.

## Beschreibung

### GEBIET DER ERFINDUNG

Die vorliegende Erfindung betrifft einen elektrischen Steckverbinder zum elektrischen Verbinden mit einem zugehörigen elektrischen Gegensteckverbinder, welcher ein elektrisch isolierendes Gehäuse, ein Kontaktelement und eine Befestigungsanordnung zur Befestigung des Kontaktelements mit einem Gegenkontaktelement des Gegensteckverbinders in einem gesteckten Zustand des Kontaktelements und des Gegenkontaktelements aufweist.

Die vorliegende Erfindung betrifft ferner eine elektrische Steckverbindung, welche einen elektrischen Steckverbinder und einen zugehörigen elektrischen Gegensteckverbinder aufweist.

Die vorliegende Erfindung betrifft schließlich eine elektrische Steckverbinderanordnung, welche ein elektrisches Verbindungselement und zwei elektrische Steckverbinder aufweist, die jeweils mit einem axialen Ende des Verbindungselements elektrisch und mechanisch verbunden sind.

### TECHNISCHER HINTERGRUND

Bei der Übertragung von elektrischer Leistung und/oder von Datensignalen sind elektrische Steckverbinder in unterschiedlichsten Ausführungen im Einsatz. Zur Übertragung von elektrischer Leistung sind Steckverbindungen, so genannte Hochspannungs-, Hochstrom- oder Hochleistungssteckverbindungen, erforderlich, welche eine sichere elektrische und mechanische Kontaktierung zwischen dem Kontaktelement des Steckverbinders und dem Gegenkontaktelement des zugehörigen Gegensteckverbinders ermöglichen.

Eine Schraubverbindung, die das Kontaktelement und das zugehörige Gegenkontaktelement miteinander verklemmen, ist hierfür nach wie vor die bevorzugte Verbindungstechnik. Insbesondere in Batteriezellenmodulsteckverbindungen, welche Batteriezellenmodule in einer elektrischen Batterie eines Fahrzeugs untereinander oder mit einem elektrischen Antrieb oder einem Hybrid-Antrieb elektrisch miteinander verbinden, ist die Schraubverbindung die gängige Befestigungstechnik.

Insbesondere bei Batteriezellenmodulsteckverbindungen erfolgt oftmals aus Bauraumgründen die Schraubrichtung der Schraubverbindung in der Steckrichtung der Batteriezellenmodulsteckverbindung. Eine derartige konstruktive Struktur erfordert eine elektrische Kontaktierung zwischen dem Kontaktelement und dem zugehörigen Gegenkontaktelement über wenigstens eine zwischengeschaltete Kontakthülse.

Für eine elektrische Steckverbindung zur Übertragung einer hohen Leistung, insbesondere für eine Batteriezellenmodulsteckverbindung, ist andererseits ein Berührschutz erforderlich, der die elektrisch leitenden Komponenten der Steckverbindung vor einer Berührung durch den menschlichen Körper und durch ein elektrisch leitendes Werkzeug eines Monteurs schützt.

Das Verschrauben des Kontaktelements mit dem Gegenkontaktelement in der zur Steckrichtung gerichteten Schraubrichtung und das zusätzliche Vorhalten von wenigstens einer Kontakthülse zwischen dem Kontaktelement und dem Gegenkontaktelement erhöht die Komplexität des Berührschutzes erheblich:
Beispielsweise aus der EP 3 892 869 B1 geht ein Berührschutz für eine derartige Batteriezellenmodulsteckverbindung hervor. Der Berührschutz des Steckverbinders und des Gegensteckverbinders umfasst nicht nur das zugehörige elektrisch isolierende Gehäuse, sondern auch zusätzlich kragenförmige Berührschutzbereiche für die Kontakthülsen und Berührschutzbereiche für die Befestigungsschraube und für die Befestigungsmutter.

Dies ist ein Zustand, den es zu verbessern gilt.

### BESCHREIBUNG DER ERFINDUNG

Vor diesem Hintergrund liegt der vorliegenden Erfindung die Aufgabe zugrunde, einen elektrischen Steckverbinder anzugeben, in welchem zur vorzugsweisen Übertragung von elektrischer Leistung ein Berührschutz mit einer vereinfachten geometrischen Struktur ausgebildet ist.

Es ist auch Aufgabe der Erfindung, eine elektrische Steckverbindung anzugeben, in welcher zur vorzugsweisen Übertragung von elektrischer Leistung ein Berührschutz mit einer vereinfachten geometrischen Struktur ausgebildet ist.

Es ist schließlich auch Aufgabe der Erfindung, eine elektrische Steckverbinderanordnung anzugeben, in welcher zur vorzugsweisen Übertragung von elektrischer Leistung ein Berührschutz mit einer vereinfachten geometrischen Struktur ausgebildet ist.

Erfindungsgemäß wird diese Aufgabe durch einen elektrischen Steckverbinder mit den Merkmalen des Patentanspruchs 1, durch eine elektrische Steckverbindung mit den Merkmalen des Patentanspruches 12 und durch eine elektrische Steckverbinderanordnung mit den Merkmalen des Patentanspruches 15 gelöst.

Demgemäß ist vorgesehen:
Ein elektrischer Steckverbinder zum elektrischen und mechanischen Verbinden mit einem zugehörigen elektrischen Gegensteckverbinder aufweisend
- ein elektrisch isolierendes Gehäuse,
- ein Kontaktelement und
- eine Befestigungsanordnung zur Befestigung des Kontaktelements mit einem Gegenkontaktelement des Gegensteckverbinders in einem gesteckten Zustand des Kontaktelements und des Gegenkontaktelements,
- wobei die Befestigungsanordnung als eine Schraubanordnung ausgebildet ist, um das Kontaktelement mit dem Gegenkontaktelement in einer Schraubrichtung zu befestigen,
- die winklig, vorzugsweise orthogonal, zu einer Steckrichtung des Steckverbinders gerichtet ist,
- wobei die Schraubanordnung ein Schraubmittel, welches in das Gehäuse in der Schraubrichtung einführbar ist, und
- ein im Gehäuse angeordnetes und mit dem Schraubmittel verschraubbares Gegenschraubmittel aufweist.

Die der vorliegenden Erfindung zugrunde liegende Erkenntnis/Idee besteht darin, einen elektrischen Steckverbinder zu schaffen, dessen Kontaktelement über eine als eine Schraubanordnung ausgebildete Befestigungsanordnung mit dem Gegenkontaktelement des zugehörigen Gegensteckverbinders in einer zur Steckrichtung winklig, vorzugsweise orthogonal, gerichteten Schraubrichtung verklemmbar ist.

Die zur Steckrichtung winklig, vorzugsweise orthogonal, gerichtete Schraubrichtung bedingt vorzugsweise ein stirnseitiges Stecken und Lösen des Steckverbinders und des Gegensteckverbinders, d. h. ein Stecken und ein Lösen in einer Längsachsrichtung eines typischerweise länglich ausgebildeten Kontaktelements des Steckverbinders bzw. eines typischerweise ebenfalls länglich ausgebildeten Gegenkontaktelements des Gegensteckverbinders. Das Verschrauben des Steckverbinders und des Gegensteckverbinders mittels der Schraubanordnung erfolgt somit vorzugsweise seitlich in einer Querachsrichtung des Kontaktelements des Steckverbinders bzw. des Gegenkontaktelements des Gegensteckverbinders.

Das stirnseitige Stecken und Lösen des Steckverbinders und des Gegensteckverbinders ermöglicht vorteilhaft ein direktes Kontaktieren des Kontaktelements und des Gegenkontaktelements ohne Zwischenschalten einer Kontakthülse. Zur Verwirklichung des stirnseitigen Steckens und Lösens der Steckverbindung zwischen dem Steckverbinder und dem Gegensteckverbinder weist das Gehäuse des Steckverbinders eine steckseitige Gehäuseöffnung auf, welche im Gehäuse des Steckverbinders stirnseitig ausgebildet ist.

Die zur Steckrichtung winklig, vorzugsweise orthogonal, gerichteten Schraubrichtung ermöglicht zusätzlich, dass sich die gesamte Schraubanordnung, welche sich aus einem Schraubmittel und einem zugehörigen Gegenschraubmittel zusammensetzt, in einem einzigen Steckverbindungspartner, d. h. einzig im Steckverbinder, anordenbar und insbesondere im Gehäuse des Steckverbinders integrierbar ist.

Da das Kontaktelement und das Gegenkontaktelement im gesteckten Zustand des Steckverbinders und des Gegensteckverbinders innerhalb des Gehäuses des Steckverbinders angeordnet sind, kann das Gehäuse des Steckverbinders, das elektrisch isolierend ausgebildet und somit aus einem elektrisch isolierenden Material hergestellt ist, vorteilhaft als einziger und umfassender Berührschutz des Steckverbinders und der Steckverbindung dienen. Aufgrund einer nicht mehr benötigten Kontakthülse zwischen dem Kontaktelement und dem zugehörigen Gegenkontaktelement entfällt ein zusätzlicher Berührschutz für eine Kontakthülse. Das Gegenschraubmittel der Schraubenanordnung ist im elektrisch isolierend ausgebildeten Gehäuse des Steckverbinders vorzugsweise vollständig angeordnet. Somit entfällt vorzugsweise auch ein zusätzlicher Berührschutz für das Gegenschraubmittel. Das Schraubmittel der Schraubenanordnung ist in der Schraubrichtung, d. h. vorzugsweise in einer zur Steckrichtung orthogonalen Richtung, zur Verschraubung mit dem Gegenschraubmittel durch eine im Gehäuse des Steckverbinders ausgebildete seitliche Gehäuseöffnung einführbar. Im verschraubten Zustand des Schraubmittels und des Gegenschraubmittels ist ein Teil der Außenflächen des Schraubmittels im elektrisch isolierend ausgebildeten Gehäuse des Steckverbinders angeordnet. Somit benötigt ein Teil der Außenflächen des Schraubmittels keinen zusätzlichen Berührschutz.

Der Teil der Außenflächen des Schraubmittels, der aus dem Gehäuse des Steckverbinders herausragen kann, kann mit einem Berührschutz versehen sein. Um einen Berührschutz für den aus dem Gehäuse herausragenden Bereich des Schraubmittels zu verwirklichen, kann der aus dem Gehäuse herausragende Bereich des Schraubmittels beispielsweise mit einer elektrisch isolierenden Beschichtung beschichtet sein oder mit einem kappenförmigen Element aus einem elektrisch isolierenden Material bedeckt oder verdeckt sein. Alternativ ist es aber auch denkbar, dass das Schraubmittel innerhalb eines domförmig ausgebildeten Bereiches des Gehäuses axial beweglich geführt ist. Der domförmig ausgebildete Bereich des Gehäuses, welcher innenseitig typischerweise an seinem äußeren Ende eine stegförmige Ausbildung aufweist, weist eine derartige Höhe auf, dass er als Berührschutz für das Schraubmittel dienen kann.

Insbesondere der Steckverbinder ist vorzugsweise als ein gerader Steckverbinder ausgebildet. Eine Längsachse des Steckverbindergehäuses erstreckt sich folglich durch eine steckseitige Gehäuseöffnung, durch die das Gegenkontaktelement des Gegensteckverbinders steck- und wieder lösbar ist, und eine verbindungsseitige Gehäuseöffnung, durch die ein elektrisches Verbindungselement, beispielsweise ein elektrisches Kabel oder eine Stromschiene, hindurchführbar ist. Alternativ kann der Steckverbinder auch als gewinkelter Steckverbinder ausgeführt sein, bei dem die Längsachse durch die steckseitige Gehäuseöffnung und die Längsachse durch die verbindungsseitige Gehäuseöffnung in einem bestimmten Winkel, vorzugsweise in einem rechten Winkel, zueinander orientiert sein können. Neben einem Steckverbinder, der an ein elektrisches Kabel oder an eine Stromschiene angebunden ist, kann der Steckverbinder verbindungsseitig alternativ auch als ein Leiterplattensteckverbinder mit einer Leiterplatte oder als ein Adaptersteckverbinder mit einem weiteren Gegensteckverbinder verbunden sein.

Da der Steckverbinder mit einem Berührschutz ausgebildet ist, ist der Steckverbinder vorzugsweise zur Übertragung einer elektrischen Spannung ausgebildet, bei der eine Berührung von elektrisch leitenden Komponenten des Steckverbinders zu einer lebensgefährdenden Situation für den Monteur führen kann. Für eine elektrische Gleichspannung von mindestens 120 V und für eine elektrische Wechselspannung von mindestens 50 V ist nach DIN VDE 0100-410 ein Berührschutz für elektrische Komponenten, Geräte, Systeme und Anlagen erforderlich. Somit ist der Steckverbinder hierbei und im Folgenden auch ein Hochspannungs-, Hochstrom- oder Hochleistungssteckverbinder, welcher jeweils eine elektrische Leistung überträgt, welche wenigstens den in der DIN VDE 0100-410 genannten Mindestspannungen entspricht.

Das Gehäuse des Steckverbinders, in dem alle Komponenten, insbesondere alle elektrisch leitenden Komponenten, des Steckverbinders angeordnet und vor Berührung von außen umschlossen bzw. umhüllt sind, ist elektrisch isolierend ausgebildet. Das Gehäuse des Steckverbinders weist vorzugsweise eine steckseitige Gehäuseöffnung zum Stecken mit dem Gegensteckverbinder, eine verbindungsseitige Gehäuseöffnung zum Hindurchführung von wenigstens einem Kontaktelement oder eines elektrischen Verbindungselements oder zum Stecken eines weiteren Gegensteckverbinders auf. Schließlich weist das Gehäuse des Steckverbinders eine seitliche Gehäuseöffnung zum Einführen eines Schraubmittels auf. Das Gehäuse des Steckverbinders kann einteilig oder mehrteilig, vorzugsweise zweitteilig, ausgeführt sein.

Der Steckverbinder kann ein einziges Kontaktelement zur Kontaktierung eines Gegenkontaktelements des zugehörigen Gegensteckverbinders aufweisen. Alternativ kann der Steckverbinder auch mehrere Kontaktelemente aufweisen, die jeweils mit einem korrespondierenden Gegenkontaktelement des zugehörigen Gegensteckverbinders kontaktierbar sind. Im Fall eines als ein Hochspannungs-, ein Hochstrom- oder ein Hochleistungssteckverbinder ausgebildeten Steckverbinders können im Gehäuse vorzugsweise zwei oder drei Kontaktelemente angeordnet sein, welche mit jeweils einem korrespondierenden Gegenkontaktelement des zugehörigen Gegensteckverbinders kontaktierbar sind. Während mit zwei Kontaktelementen bekanntlich ein Gleichstrom im Vorwärts- und Rückwärtspfad oder alternativ ein einphasiger Wechselstrom übertragbar ist, ist mit drei Kontaktelementen ein dreiphasiger Wechselstrom übertragbar. Jedes der Kontaktelementpaare aus einem Kontaktelement und einem zugehörigen Gegenkontaktelement ist jeweils durch eine zugehörige als eine Schraubanordnung ausgebildete Befestigungsanordnung miteinander befestigt. Die einzelnen Kontaktelementpaare aus einem Kontaktelement und einem zugehörigen Gegenkontaktelement und die zugehörige Schraubanordnung aus einem Schraubmittel und einem Gegenschraubmittel sind im Gehäuse elektrisch isoliert voneinander angeordnet.

Denkbar ist auch eine technische Lösung, bei der das axiale Ende des elektrischen Verbindungselements, d. h. des elektrischen Kabels oder der Stromschiene, aufgrund einer hohen Stromtragfähigkeit innerhalb des Steckverbinders in mehrere parallele Kontaktelemente übergeht, die jeweils zugehörige Gegenkontaktelemente des Gegensteckverbinders kontaktieren, die ebenfalls parallel vorliegen und ausgangsseitig elektrisch und mechanisch zusammengeführt sind. Die mehrfach vorliegenden Kontaktpaare aus jeweils einem Kontaktelement und einem zugehörigen Gegenkontaktelement sind vorzugsweise innerhalb einer Schraubanordnung gestapelt angeordnet und somit von einer einzigen Schraubanordnung geklemmt. Die parallelen Kontaktelemente und die zugehörigen parallelen Gegenkontaktelemente können in einer weniger vorzugsweisen Ausführung auch nebeneinander angeordnet sein. Jedes Kontaktelementpaar aus einem Kontaktelement und einem Gegenkontaktelement kann hierbei jeweils von einer separaten Schraubanordnung geklemmt sein.

In der Befestigungsanordnung, welche als Schraubanordnung ausgeführt ist, ist im gesteckten Zustand des Kontaktelements und des Gegenkontaktelements das Kontaktelement und das zugehörige Gegenkontaktelement zwischen dem Schraubmittel und dem mit dem Schraubmittel verschraubten Gegenschraubmittel eingeklemmt. Vorzugsweise können das Kontaktelement auf der Seite des Schraubmittels und das Gegenkontaktelement auf der Seite der Gegenschraubmittels in der Schraubenanordnung eingeklemmt sein. Alternativ kann in der Schraubenanordnung aber auch das Kontaktelement auf der Seite des Gegenschraubmittels und das Gegenkontaktelement auf der Seite des Schraubmittels eingeklemmt sein. Die vorzugsweise Anordnung des Kontaktelements und des Gegenkontaktelements innerhalb der Schraubanordnung ermöglicht gegenüber der alternativen Anordnung eine einfachere Vorfixierung des Kontaktelements im Steckverbindergehäuse im nicht gesteckten Zustand.

In einer vorzugsweisen Ausbildung einer Schraubanordnung kann das Schraubmittel als eine Schraube mit einem am Schraubenschaft ausgebildeten Außengewinde ausgebildet sein, das mit dem Innengwinde des als eine Schraubenmutter ausgebildeten Gegenschraubmittels verschraubbar ist. Die in das Gehäuse des Steckverbinders einzufügende und mit einem Werkzeug zu verschraubende Schraubkomponente, d. h. die zu rotierende Schraubkomponente, der Schraubanordnung ist hierbei die Schraube, welche hierzu am Schraubenkopf eine mechanische Schnittstelle für das Werkzeug, d. h. eine zur Außen- oder Innenkontur des Werkzeugs korrespondierende Innen- oder Außenkontur, aufweist. Alternativ kann aber auch das Schraubmittel als eine Schraubenmutter ausgebildet sein, dessen Innengewinde mit dem Außengewindes eines als eine Schraube ausgebildeten Gegenschraubmittels verschraubbar ist. Die in das Gehäuse einzufügende und mit einem Werkzeug zu verschraubende Schraubkomponente, d. h. die zu rotierende Schraubkomponente, der Schraubanordnung ist hierbei die Schraubenmutter, an der hierzu eine Außen- oder eine Innenkontur ausgebildet sein kann, welche mit einer korrespondierenden Innen- oder Außenkontur des Werkzeugs zusammenwirkt.

Im nicht gesteckten Zustand des Kontaktelements und des Gegenkontaktelements fixiert die als eine Schraubanordnung ausgebildete Befestigungsanordnung einzig das Kontaktelement im Gehäuse des Steckverbinders, indem der Schraubenschaft der Schraube durch die Durchführung des Kontaktelements hindurchgeführt ist.

Die Schraubrichtung der Schraubanordnung, welche winklig, vorzugsweise orthogonal, zur Steckrichtung ausgerichtet ist, ermöglicht ein seitliches Verklemmen des Kontaktelements mit dem Gegenkontaktelement im Gehäuse des Steckverbinders. Werden das Kontaktelement und das Gegenkontaktelement im Gehäuse eines einzigen Steckverbinder-Partners, d. h. im Steckverbindergehäuse, über die Schraubanordnung miteinander verklemmt, so ist berührschutzbedingt zwischen dem Kontaktelement und dem Gegenkontaktelement kein zwischengeschaltetes Element wie beispielsweise eine Kontakthülse oder ein Kontaktblech erforderlich.

Somit ist ein direktes Kontaktieren, d. h. ein unmittelbares Kontaktieren, zwischen dem Kontaktelement und dem Gegenkontaktelement, insbesondere über die seitliche Kontaktfläche des Kontaktelements und die zugehörige Gegenseitenfläche des Gegenkontaktelements, verwirklichbar. Eine derartige großflächige Kontaktierung über die seitliche Kontaktfläche des Kontaktelements und die zugehörige Gegenseitenfläche des Gegenkontaktelements ist vor allem bei Hochspannungs-, Hochstrom- oder Hochleistungssteckverbindern anzustreben.

Vorteilhafte Ausgestaltungen und Weiterbildungen ergeben sich aus den weiteren Unteransprüchen sowie aus der Beschreibung unter Bezugnahme auf die Figuren der Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

In einer vorzugsweisen Ausprägung der Erfindung kann das Kontaktelement steckseitig einen Kontaktierungsbereich zur Kontaktierung mit dem Gegenkontaktelement aufweisen. Vorzugsweise kann am Kontaktelement wenigstens im Kontaktierungsbereich eine planare Kontaktfläche ausgebildet sein, um eine planare Gegenkontaktfläche des Gegenkontaktelements zu kontaktieren. Die Planarität der Kontaktfläche des Kontaktelements und der Gegenkontaktfläche des Gegenkontaktelements ermöglicht vorteilhaft einen großflächigen Kontakt zwischen dem Kontaktelement und dem korrespondierenden Gegenkontaktelement, was insbesondere bei der Übertragung einer höheren elektrischen Leistung vorteilhaft ist.

Im Fall eines Kontaktelements und eines Gegenkontaktelements, welche jeweils eine planare Kontaktfläche und eine der Kontaktfläche gegenüberliegende planare Seitenfläche aufweisen, lässt sich ein einfaches und sicheres Verklemmen des Kontaktelements und des Gegenkontaktelements innerhalb der Schraube und der Schraubenmutter der Schraubenanordnung verwirklichen.

Die Ausbildung des Kontaktelements und des Gegenkontaktelements mit jeweils einer planaren Kontaktfläche kann nicht nur auf den Kontaktierungsbereich begrenzt sein, sondern kann sich auch über die gesamte Längserstreckung des Kontaktelements bzw. des Gegenkontaktelements erstrecken. Insbesondere im Fall des Kontaktelements kann auch der am verbindungsseitigen Ende ausgebildete Verbindungsbereich als ein Kontaktelement mit planaren Verbindungsflächen ausgeführt sein. Ein stoffschlüssiges Verbinden des Verbindungsbereichs des Kontaktelements mit einer Stromschiene oder mit kompaktierten Litzen eines elektrischen Kabels vorzugsweise mittels einer Schweißverbindung lässt sich bei einem rechteckförmigen Querschnittsprofil des Kontaktelements vereinfachen.

Um die Verklemmung des Kontaktelements mit dem Gegenkontaktelement mittels einer Schraubanordnung zu verwirklichen, kann im Kontaktierungsbereich des Kontaktelements vorzugsweise eine Durchführung ausgebildet sein, durch die im gesteckten Zustand des Kontaktelements und des Gegenkontaktelements die Schraube der Schraubanordnung hindurchgeführt sein kann. Insbesondere kann das Querschnittsprofil der Durchführung an das Querschnittsprofil des Schraubenschaftes der Schraube angepasst sein und somit kann die Durchführung insbesondere als eine Durchgangsbohrung mit einem gegenüber dem Durchmesser des Schraubenschaftes vergrößerten Durchmesser ausgeführt sein.

In einer weiteren bevorzugten Ausprägung der Erfindung kann in einem axialen Abschnitt eines Schraubenschaftes der Schraube eine stegförmige Erweiterung ausgebildet sein.

Die stegförmige Erweiterung am Schraubenschaft der Schraube verlagert das Verklemmen des Kontaktelements mit dem Gegenkontaktelement von der Auflagefläche des Schraubenkopfes der Schraube axial in Richtung der Schraubenmutter. Somit kann sich zwischen der Auflagefläche des Schraubenkopfes und der dem Schraubenkopf zugewandten Seitenfläche der stegförmigen Erweiterung ein Spalt ausbilden. In diesen Spalt lässt sich ein elektrisch isolierendes Verkleidungselement des Gegenkontaktelements, welches vom Gegenkontaktelement seitlich beabstandet angeordnet ist und einen Teil des Berührschutzes des Gegenkontaktelements darstellt, im Steckvorgang und im gesteckten Zustand des Steckverbinders und des Gegensteckverbinders einführen. Das Gegenkontaktelement und das der Gegenkontaktfläche des Gegenkontaktelements zugewandte elektrisch isolierende Verkleidungselement können im Kontaktierungsbereich mit dem Kontaktelement jeweils gabelförmig ausgebildet sein, um ein Umgreifen des Schraubenschaftes der Schraube zu ermöglichen. Äquivalent kann das der Gegenkontaktfläche des Gegenkontaktelements abgewandte elektrisch isolierende Verkleidungselement im Kontaktierungsbereich mit dem Kontaktelement gabelförmig ausgebildet sein, um ein Umgreifen der Schraubenmutter zu ermöglichen.

Die stegförmige Erweiterung kann sich im axialen Abschnitt des Schraubenschaftes der Schraube vorzugsweise in einer zu einer Mittenachse der Schraube radialen Richtung und in einer Umfangrichtung des Schraubenschaftes wenigstens in einem Winkelsegment, vorzugsweise vollumfänglich, d. h. flanschförmig, erstrecken. Die radiale Erstreckung der stegförmigen Erweiterung kann typischerweise gleich groß oder geringer als die radiale Erstreckung der Auflagefläche des Schraubenkopfes der Schraube ausgeführt sein, um eine gleichwertige Klemmung des Kontaktelements und des Gegenkontaktelements zwischen der Schraubenmutter und der der Schraubenmutter zugewandten Seitenfläche der stegförmigen Erweiterung wie im Fall einer Klemmung an der Auflagefläche des Schraubenkopfes der Schraube zu erzielen.

Die geringe radiale Erstreckung der stegförmigen Erweiterung bedingt, dass ein Stecken des Gegenkontaktelements zwischen dem Kontaktelement und der Schraubenmutter einem Stecken des Gegenkontaktelements zwischen der stegförmigen Erweiterung und dem Kontaktelement vorzuziehen ist. Im ersten Fall ist ein Abstandsmittel zum Fixieren des bereits im Steckverbinder vormontierten Kontaktelements und zur Vorhaltung eines ausreichend großen Steckplatzes für das zu steckende Gegenkontaktelement zwischen dem Kontaktelement und der Schraubenmutter vorzusehen, das sich nur vergleichsweise geringfügig von der Gehäusewand bis zum Kontaktelement erstreckt. Im zweiten Fall ist dagegen ein Abstandsmittel zum Fixieren des der stegförmigen Erweiterung der Schraube und zur Vorhaltung eines ausreichend großen Steckplatzes für das zu steckende Gegenkontaktelement zwischen der stegförmigen Erweiterung und dem Kontaktelement vorzusehen, das sich vergleichsweise weit von der Gehäusewand bis zur stegförmigen Erweiterung erstrecken muss.

In einer vorzugsweisen Ausprägung der Erfindung kann das Schraubmittel als die zu verschraubende bzw. zu rotierende Schraubkomponente der Schraubanordnung ausgewählt sein. Somit kann in diesem Fall das Gegenschraubmittel als die nicht zu bewegende Schraubkomponente der Schraubanordnung ausgewählt sein. In diesem Fall kann das Gegenschraubmittel verdrehsicher im Gehäuse angeordnet sein. Hierzu kann das Gegenschraubmittel vorzugsweise mittels einer formschlüssigen Verbindung mit dem Gehäuse verbunden sein, indem im Gehäuse innenseitig eine zur Außenkontur des Gegenschraubmittels korrespondierende Innenkontur oder alternativ eine zur Innenkontur des Gegenschraubmittels korrespondierende Außenkontur ausgeformt sein kann. Zusätzlich kann das Gegenschraubmittel auch gegenüber einer axialen Bewegung im nicht gesteckten Zustand und/oder im gesteckten Zustand des Kontaktelements mit dem Gegenkontaktelement gesichert sein. Entsprechend im Gehäuse ausgebildete Rastnasen oder Rasthaken können beispielsweise eine axiale Fixierung des Gegenschraubmittels im Gehäuse verwirklichen.

Das Gehäuse des Steckverbinders lässt sich prinzipiell einteilig ausbilden. Dies bedingt eine axiale Montage des Kontaktelements mit dem stoffschlüssig daran befestigten elektrischen Verbindungselement durch die verbindungsseitige Gehäuseöffnung. Eine Montage der Schraubenmutter durch die steckseitige Gehäuseöffnung kann sich aber schwierig gestalten. Somit kann eine vorzugsweise zweiteilige Ausbildung des Gehäuses eine Vereinfachung der Montage bewirken. Ein derartiges zweiteiliges Gehäuse weist bevorzugt einen Gehäusegrundkörper und einen Gehäusedeckel auf. In den Gehäusegrundkörper wird das Kontaktelement mit dem elektrischen Verbindungselement und das Gegenschraubmittel seitlich eingefügt und platziert. Der Gehäusedeckel kann vorzugsweise formschlüssig, beispielsweise über eine Rastlasche, mit dem Gehäusegrundkörper verbunden sein.

Wie bereits erwähnt kann vorzugsweise im Gehäuse ein Abstandsmittel vorgesehen sein, um im nicht gesteckten Zustand des Kontaktelements und des Gegenkontaktelements im Gehäuse einen Steckplatz zum Stecken des Gegenkontaktmittels vorzuhalten. In einer vorzugsweisen Ausprägung kann der Steckplatz für das zu steckende Gegenkontaktelement zwischen dem Kontaktelement und der Schraubenmutter ausgebildet sein. In einer alternativen Ausprägung kann der Steckplatz für das zu steckende Gegenkontaktelement zwischen dem Schraubenkopf der Schraube, insbesondere zwischen der stegförmigen Erweiterung im Schaftabschnitt der Schraube, und dem Kontaktelement ausgebildet sein.

Am Abstandsmittel kann hierzu eine Auflagefläche ausgebildet sein, auf der das Kontaktelement in einem nicht gesteckten Zustand mit dem Gegenkontaktelement aufliegt. Das Aufliegen des Kontaktelements auf der Auflagefläche des Abstandsmittels verhindert ein zumindest teilweises Versperren, insbesondere ein vollständiges Versperren, des Steckplatzes durch das Kontaktelement aufgrund der auf das Kontaktelement wirkenden Schwerkraft.

Die Auflagefläche des Abstandsmittels für das Kontaktelement kann in einer vorzugsweisen Ausprägung der Erfindung durch eine an einer Innenwand des Gehäuses ausgebildeten Auflagefläche verwirklicht sein. Der Abstand der Auflagefläche des Abstandsmittels von der Schraubenmutter oder vom Schraubkopf bzw. von der stegförmigen Erweiterung im Schaftabschnitt der Schraube kann bevorzugt kleiner, besonders bevorzugt geringfügig kleiner, als die Dicke des Gegenkontaktelements bemessen sein. Folglich kann das Kontaktelement durch das steckende Gegenkontaktelement in einem bestimmten Ausmaß, vorzugsweise in einem geringen Ausmaß, von der Auflagefläche des Abstandsmittels gehoben bzw. entfernt sein. Das Abstandsmittel mit der Auflagefläche kann in einer weniger vorzugsweisen Ausbildung aber auch eine vom Gehäuse getrennte Abstandskomponente innerhalb des Gehäuses sein.

In einer weiteren vorzugsweisen Ausprägung der Erfindung kann das Kontaktelement verbindungsseitig einen Verbindungsbereich zum Verbinden mit einem elektrischen Verbindungselement aufweisen. Der Verbindungsbereich des Kontaktelements kann vorzugsweise unmittelbar oder alternativ über einen Übergangsbereich des Kontaktelements in den Kontaktierungsbereich des Kontaktelements übergehen. Das elektrische Verbindungselement kann vorzugsweise ein elektrisches Kabel oder eine Stromschiene sein. Die elektrische und mechanische Verbindung zwischen dem Verbindungsbereich des Kontaktelements und dem elektrischen Verbindungselement erfolgt vorzugsweise stoffschlüssig, insbesondere vorzugsweise über eine Schweißverbindung wie beispielsweise eine Laserschweißverbindung, eine Rührreibschweißverbindung, eine Ultraschallschweißverbindung oder eine Widerstandsschweißverbindung. Denkbar ist auch ein formschlüssiges Verbinden, vorzugsweise ein Crimpverbinden, des Verbindungsbereiches des Kontaktelements mit den Kabellitzen eines elektrischen Kabels.

Das Gehäuse des Steckverbinders kann vorzugsweise eine verbindungsseitige Gehäuseöffnung zum Durchführen eines elektrischen Verbindungselements aufweisen. Die verbindungsseitige Gehäuseöffnung kann auch in einer zum Gehäuse gehörigen Abschlusskappe realisiert sein. Ein in der Gehäuseöffnung bzw. in der Abschlusskappe angeordnetes elektrisch isolierendes Kabeldichtungselement kann als ein zusätzliches Berührschutzelement vorgesehen sein.

Wie bereits erwähnt kann der Steckverbinder vorzugsweise als ein Hochstrom-, Hochspannungs- oder Hochleistungssteckverbinder ausgebildet sein, in welchem ein Berührschutz für alle elektrisch leitenden Komponenten des Steckverbinders vorgesehen ist. In einer besonders vorzugsweisen Ausprägung kann der Steckverbinder wie ebenfalls schon erwähnt als ein Batteriezellenmodulsteckverbinder zum elektrischen und mechanischen Verbinden mit einem Batteriezellenmodulgegensteckverbinder eines Batteriezellenmoduls einer elektrischen Batterie ausgebildet sein.

In einer weiteren vorzugsweisen Ausprägung der Erfindung kann im Steckverbinder ein weiteres Kontaktelement angeordnet sein, das zusätzlich zum Kontaktelement und zum Gegenkontaktelement innerhalb der Schraubanordnung eingeklemmt sein kann. Vorzugsweise kann hierbei das Gegenkontaktelement zwischen dem Kontaktelement und dem weiteren Kontaktelement eingeklemmt sein. Hierbei kann das Kontaktelement nächst benachbart zum Schraubmittel und das weitere Kontaktelement nächst benachbart zum Gegenschraubmittel angeordnet sein.

Äquivalent zum Kontaktelement kann das weitere Kontaktelement einen Kontaktierungsbereich zum Kontaktieren mit dem Gegenkontaktelement und einen Verbindungsbereich aufweisen, der eingerichtet ist, mit einem weiteren elektrischen Verbindungselement elektrisch und mechanisch verbindbar zu sein. Das weitere elektrische Verbindungselement kann als ein elektrisches Kabel oder alternativ als eine Stromschiene ausgebildet sein. Das andere axiale Ende des weiteren elektrischen Verbindungselements kann über eine weitere elektrische Steckverbindung mit einem weiteren elektrischen Aggregat, insbesondere mit einem weiteren Batteriezellenmodul, elektrisch und mechanisch verbunden sein. Auf diese Weise lässt sich ein so genannter Y-Verteiler realisieren, in dem drei elektrische Aggregate, insbesondere drei Batteriezellenmodule, unmittelbar und direkt miteinander elektrisch und mechanisch verbindbar sind und somit eine Parallelisierung von elektrischen Aggregaten bzw. von Batteriezellenmodulen verwirklichbar ist.

Äquivalent zum Kontaktelement kann auch im weiteren Kontaktelement eine Durchführung, vorzugsweise eine Durchgangsbohrung, ausgebildet sein, durch die die Schraube der Schraubanordnung durchgeführt sein kann. Für das weitere Kontaktelement kann ebenfalls ein Abstandsmittel mit einer Auflagefläche, vorzugsweise eine an einer Innenwand des Gehäuses ausgebildete Auflagefläche, ausgebildet sein, auf der das weitere Kontaktelement in einem nicht gesteckten Zustand mit dem Gegenkontaktelement aufliegt, um im Gehäuse einen Steckplatz zum Stecken des Gegenkontaktelements vorzuhalten.

Um im nicht gesteckten Zustand des Kontaktelements und des weiteren Kontaktelements mit dem Gegenkontaktelement zwischen dem Kontaktelement und dem weiteren Kontaktelement und somit zwischen zwei elektrischen Aggregaten bzw. zwischen zwei Batteriezellenmodulen über die vorzugsweise metallisch ausgebildete Schraube eine elektrische Verbindung zu verhindern, können vorzugsweise die beiden technischen Maßnahmen ausgebildet sein:
1. Zwischen dem Schraubenkopf der Schraube und der Kontaktelementkomponente, welche dem Schraubenkopf am nächsten angeordnet ist, d. h. entweder dem Kontaktelement oder dem weiteren Kontaktelement, kann eine Feder angeordnet sein, welche im nicht gesteckten Zustand der Steckverbindung, d. h. im nicht verschraubten Zustand der Schraubverbindung, den Schraubenkopf von der dem Schraubenkopf nächst benachbarten Kontaktelementkomponente beabstandet. Stützt sich die Feder an einen Bereich des elektrisch isolierenden Gehäuses ab, welcher zumindest einen dem Schraubenkopf zugewandten Flächenabschnitt der dem Schraubenkopf nächst benachbarten Kontaktelementkomponente bedeckt, so ist der Schraubenkopf der Schraube über eine typischerweise metallisch ausgebildete Feder nicht mit der dem Schraubenkopf nächst benachbarten und metallisch ausgebildeten Kontaktelementkomponente elektrisch verbunden. Ein an einem elektrischen Aggregat bzw. an einem Batteriezellenmodul anliegendes elektrisches Potential kann somit nicht über eine dem Schraubenkopf nächst benachbarte Kontaktelementkomponente, die metallische Feder, die metallische Schraube, die jeweils andere Kontaktelementkomponente, d. h. die vom Schraubenkopf weiter entfernt angeordnete Kontaktelementkomponente, zum weiteren elektrischen Aggregat bzw. zum weiteren Batteriezellenmodul gelangen. Ein elektrisches Kurzschließen zwischen zwei elektrischen Aggregaten bzw. zwischen zwei Batteriezellenmodulen im nicht gesteckten Zustand des Steckverbinders lässt sich somit verhindern.
   Die elektrische Verbindung zwischen dem Schraubenkopf und der dem Schraubenkopf nächst benachbarte Kontaktelementkomponente über die metallische Feder lässt sich alternativ verhindern, indem sich die Feder an einer elektrischen Isolierung, d. h. vorzugsweise an einem elektrisch isolierenden kappenförmigen Element, welches auf den metallischen Grundkörper des Schraubenkopfes aufgesteckt ist, abstützt.
2. Eine elektrische Verbindung zwischen dem Schraubenschaft der Schraube und einer Innenwand der Durchführung der dem Schraubenkopf nächst benachbarten Kontaktelementkomponente kann im nicht gesteckten Zustand des Steckverbinders durch ein elektrisch isolierendes hülsenförmiges Element verwirklicht sein. Das elektrisch isolierende hülsenförmige Element kann entweder am Schraubenschaft der Schraube oder an der dem Schraubenkopf der Schraube nächst benachbarten Kontaktelementkomponente im Bereich der Durchführung fixiert sein.

Die Erfindung betrifft ferner eine elektrische Steckverbindung aufweisend einen elektrischen Steckverbinder und den zugehörigen elektrischen Gegensteckverbinder.

Die bisher und im Folgenden zum elektrischen Steckverbinder erwähnten technischen Merkmale, technischen Wirkungen und technischen Vorteile gelten äquivalent bei der elektrischen Steckverbindung.

Der Steckverbinder kann typischerweise getrennt vom Gegensteckverbinder hergestellt und einem Produzenten des Gegensteckverbinders oder alternativ an einen weiteren Produzenten ausgeliefert werden, der den Steckverbinder und den Gegensteckverbinder bezieht und verbaut. Der Produzent bzw. der weitere Produzent kann die Steckverbindung aus dem Steckverbinder und dem Gegensteckverbinder stecken und typischerweise die gesteckte Steckverbindung in einem größeren Aggregat, einem System oder einer Anlage verbauen.

In einer vorzugsweisen Ausprägung der Steckverbindung kann das Gegenkontaktelement gabelförmig mit einer Durchführung ausgebildet sein, durch die im gesteckten Zustand die Schraube durchgeführt ist. Die Durchführung des gabelförmig ausgebildeten Gegenkontaktelements kann als eine längliche Ausnehmung ausgeformt sein, welche sich ausgehend vom steckseitigen Ende des Gegenkontaktelements in Steckrichtung des Steckverbinders erstrecken kann. Bevorzugt kann die Durchführung am steckseitigen Ende des Gegenkontaktelements gefast ausgebildet sein, um im Sinne einer Fangtrichterfunktion im Zusammenwirken mit der Schraube das Ausrichten des Gegenkontaktelements zum Kontaktelement zu vereinfachen. Die Breite der Durchführung, d. h. die Breite der länglichen Ausnehmung, kann bevorzugt größer als der Durchmesser des Schraubenschaftes der Schraube ausgeführt sein, um ein Stecken des Gegenkontaktelements in den Steckverbinder zu ermöglichen.

Durch die gabelförmige Ausbildung des Gegenkontaktelements lässt sich das Gegenkontaktelement in den zugehörigen Steckplatz des bereits vormontierten Steckverbinders einfügen und wieder lösen. Die Schraubanordnung, die das Kontaktelement im vormontierten Steckverbinder verliersicher vorfixiert, verklemmt in der Endmontage bzw. im fertig montierten Zustand der Steckverbindung das Kontaktelement und das Gegenkontaktelement mit einer ausreichenden Fixier- und Kontaktkraft.

Das Gegenkontaktelement des Gegensteckverbinders kann in einem Gehäuse des Gegensteckverbinders aufgenommen und angeordnet sein. Die technischen Ausprägungen des Gehäuses hinsichtlich steckseitiger und verbindungsseitiger Gehäuseöffnung können äquivalent zum Gehäuse des Steckverbinders ausgebildet sein. Im Fall eines als ein Hochstrom-, Hochspannungs- oder Hochleistungssteckverbinder ausgebildeten Gegensteckverbinders kann die Berührschutzfunktion einzig durch das Gehäuse des Gegensteckverbinders verwirklicht sein.

Im Fall eines als ein Batteriezellenmodulgegensteckverbinders ausgebildeten Gegensteckverbinders kann das Gegenkontaktelement auf beiden Seiten, d. h. auf der Seite der Gegenkontaktfläche und auf der der Seite der Gegenkontaktfläche gegenüberliegenden Seite, jeweils von einem elektrisch isolierenden Verkleidungselement bedeckt bzw. verdeckt sein. Die beiden elektrisch isolierenden Verkleidungselemente können auf einer weiteren Seite des Gegenkontaktelements vorzugsweise einteilig und elektrisch isolierend miteinander verbunden sein. Im Bereich der Gegenkontaktfläche des Gegenkontaktelements kann das elektrisch isolierende Verkleidungselement bevorzugt von der Kontaktfläche beabstandet angeordnet sein, um ein elektrisches Kontaktieren der Kontaktflächen des Kontaktelements mit der Gegenkontaktfläche des Gegenkontaktelements zu ermöglichen. Die vierte Seite des Gegenkontaktelements kann auch von einem elektrisch isolierenden Verkleidungselement bedeckt bzw. verdeckt sein, so dass das Gegenkontaktelement insgesamt von einer hülsenförmigen elektrisch isolierenden Verkleidung umhüllt sein kann. Alternativ kann ein Berührschutz der vierten Seite des Gegenkontaktelements auch durch die zwei parallel zueinander angeordneten elektrisch isolierenden Verkleidungselemente verwirklicht sein, die jeweils gegenüber der vierten Seite des Gegenkontaktelements überstehend ausgebildet sein können.

Das Gegenkontaktelement kann an den Stirnseiten des Gegenkontaktelements auch von einem elektrisch isolierenden Verkleidungselement bedeckt bzw. verdeckt sein. Vorzugsweise können die einzelnen elektrisch isolierenden Verkleidungselemente einteilig miteinander verbunden sein.

Das Gegenkontaktelement eines als ein Batteriezellenmodulgegensteckverbinder ausgebildeten Gegensteckverbinders kann im weiteren Verlauf zum Batteriezellenmodul eine beliebige Ausformung aufweisen und von einem korrespondierend ausgeformten Berührschutz verdeckt sein. Vorzugsweise lassen sich im Steckvorgang die elektrisch isolierenden Verkleidungen des Gegenkontaktelements gemeinsam mit dem Gegenkontaktelement in das Gehäuse des Steckverbinders, insbesondere in jeweils ausgeformte Ausnehmungen in der Schraubanordnung, einfügen.

Die Erfindung betrifft schließlich eine elektrische Steckverbinderanordnung, welche ein elektrisches Verbindungselement und zwei elektrische Steckverbinder aufweist. Jeder Steckverbinder ist hierbei jeweils mit einem unterschiedlichen axialen Ende des Verbindungselements elektrisch und mechanisch verbunden. Wenigstens ein Steckverbinder, vorzugsweise beide Steckverbinder, ist bzw. sind jeweils als ein erfindungsgemäßer elektrischer Steckverbinder ausgebildet. In einer weniger vorzugsweisen Ausbildung kann einer der beiden Steckverbinder auch ein zum erfindungsgemäßen Steckverbinder verschieden ausgebildeter Steckverbinder sein.

Die bisher und im Folgenden zum elektrischen Steckverbinder und zur elektrischen Steckverbindung jeweils erwähnten technischen Merkmale, technischen Wirkungen und technischen Vorteile gelten äquivalent bei der elektrischen Steckverbinderanordnung.

Das elektrische Verbindungselement, das wie bereits erwähnt vorzugsweise als ein elektrisches Kabel oder als eine Stromschiene ausgebildet sein kann, kann im Fall eines als ein Batteriezellenmodulsteckverbinder ausgebildeten Steckverbinders als elektrische Verbindung zwischen zwei vorzugsweise benachbart angeordneten Batteriezellemodulen in einer elektrischen Batterie dienen.

Der Gegensteckverbinder kann nicht nur zwei Schnittstellen zu jeweils einem mit einem Batteriezellenmodul verbundenen elektrischen Verbindungselement, sondern auch mehr als zwei Schnittstellen aufweisen, um das Batteriezellenmodul mit mehr als zwei Batteriezellenmodulen zu verbinden. Die weiteren Schnittstellen können entweder benachbart in einer Ebene und/oder benachbart in mehreren Ebenen ausgebildet sein.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine isometrische Darstellung einer elektrischen Verbindungsanordnung zwischen Batteriezellenmodulen einer elektrischen Batterie,
- Fig. 2A: eine perspektivische Längsschnittdarstellung eines erfindungsgemäßen elektrischen Steckverbinders im nicht gesteckten Zustand,
- Fig. 2B: eine perspektivische Längsschnittdarstellung eines erfindungsgemäßen elektrischen Steckverbinders im nicht gesteckten Zustand ohne Gehäusedeckel,
- Fig. 2C: eine Längsschnittdarstellung eines erfindungsgemä-ßen elektrischen Steckverbinders im nicht gesteckten Zustand,
- Fig. 2D: eine perspektivische Darstellung eines erfindungsgemäßen elektrischen Steckverbinders im nicht gesteckten Zustand,
- Fig. 3A: eine perspektivische Darstellung eines Gegenkontaktelements eines elektrischen Gegensteckverbinders,
- Fig. 3B: eine perspektivische Darstellung eines elektrischen Gegensteckverbinders,
- Fig. 4A: eine perspektivische Darstellung der Kontaktanordnung der erfindungsgemäßen elektrischen Steckverbindung im gesteckten Zustand,
- Fig. 4B: eine perspektivische Darstellung der erfindungsgemäßen elektrischen Steckverbindung im gesteckten Zustand,
- Fig. 4C: eine perspektivische Längsschnittdarstellung der erfindungsgemäßen elektrischen Steckverbindung im gesteckten Zustand,
- Fig. 5A: eine Längsschnittdarstellung des erfindungsgemäßen elektrischen Steckverbinders mit einer weiteren Variante der Schraubanordnung im nicht gesteckten Zustand,
- Fig. 5B: eine Längsschnittdarstellung des erfindungsgemäßen elektrischen Steckverbinders mit einer weiteren Variante der Schraubanordnung im gesteckten Zustand,
- Fig. 6A: eine isometrische Darstellung einer weiteren elektrischen Verbindungsanordnung zwischen Batteriezellenmodulen einer elektrischen Batterie,
- Fig. 6B: eine Querschnittdarstellung einer weiteren Ausprägung des erfindungsgemäßen elektrischen Steckverbinders im nicht gesteckten Zustand und
- Fig. 6C: eine Querschnittdarstellung einer weiteren Ausprägung des erfindungsgemäßen elektrischen Steckverbinders im gesteckten Zustand.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

Im Folgenden werden die Figuren zusammenhängend und übergreifend beschrieben.

### BESCHREIBUNG VON AUSFÜHRUNGSBEISPIELEN

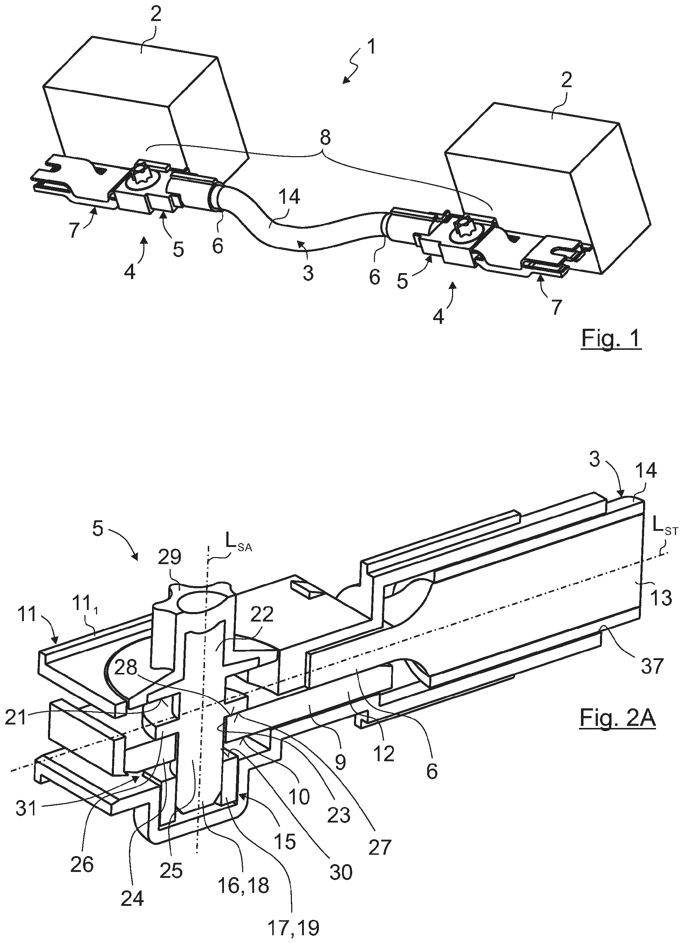

Aus Fig. 1 geht eine elektrische Verbindungsanordnung 1 hervor, die zwei Batteriezellenmodule 2 einer elektrischen Batterie elektrisch verbindet. Ein elektrisches Verbindungselement 3, das in dieser Darstellung beispielsweise als ein elektrisches Kabel ausgeführt ist, ist über jeweils zwei elektrische Steckverbindungen 4 mit den beiden Batteriezellenmodulen 2 elektrisch und mechanisch verbunden. Über die einzelne elektrische Steckverbindung 4 ist die einzelne elektrische Verbindung zwischen dem elektrischen Verbindungselement 3 und dem zugehörigen Batteriezellenmodul 2 steck- und lösbar und somit das elektrische Verbindungselement 3 oder eines der Batteriezellenmodule 2 auswechselbar. Jede elektrische Steckverbindung 4 setzt sich aus einem elektrischen Steckverbinder 5, welcher mit einem axialen Ende 6 des elektrischen Verbindungselements 3 elektrisch und mechanisch verbunden ist, und einem zugehörigen elektrischen Gegensteckverbinder 7 zusammen, welcher mit dem Batteriezellenmodul 2 elektrisch und mechanisch verbunden ist. Das elektrische Verbindungselement 3 und die an den beiden axialen Enden 6 des elektrischen Verbindungselements 3 jeweils elektrisch und mechanisch verbundenen elektrischen Steckverbinder 5 bilden eine elektrische Steckverbinderanordnung 8.

Die elektrische Steckverbindung 4 aus elektrischem Steckverbinder 5 und zugehörigem elektrischen Gegensteckverbinder 7 kann in dieser Anwendung auch als Batteriezellenmodulsteckverbindung mit einem Batteriezellenmodulsteckverbinder und einem zugehörigen Batteriezellenmodulgegensteckverbinder bezeichnet werden. Der elektrische Gegensteckverbinder 7 weist in Fig. 1 neben einer elektrischen Schnittstelle zum Batteriezellenmodul 2 zwei weitere elektrische Schnittstellen auf, um das Batteriezellenmodul 2 mit zwei weiteren Batteriezellenmodulen 2 zu verbinden.

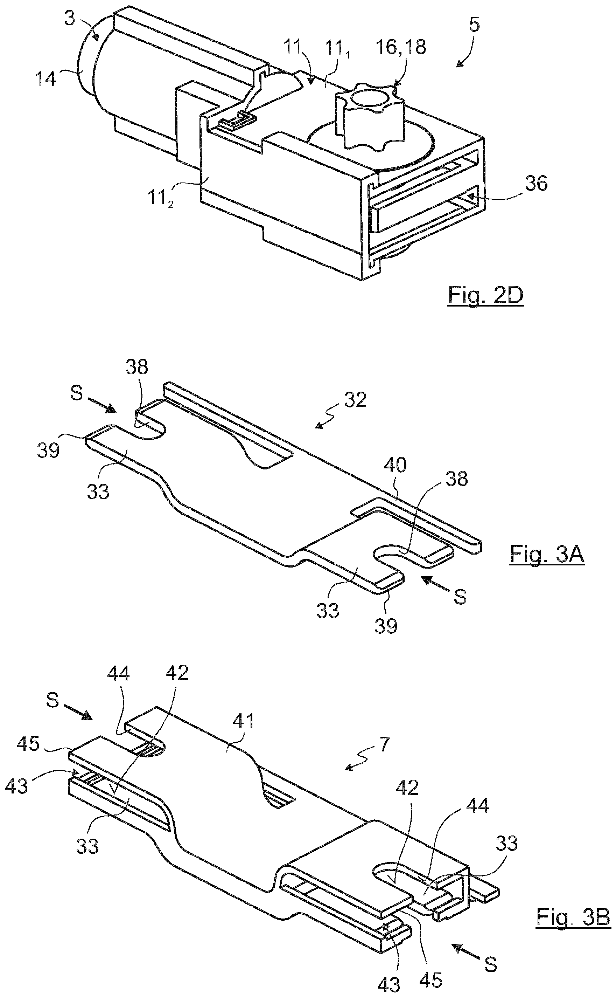

In den folgenden Figuren 2A bis 2D ist jeweils ein erfindungsgemäßer elektrischer Steckverbinder 5 im nicht gesteckten Zustand dargestellt:
Gemäß der perspektivischen Längsschnittdarstellung der Fig. 2A weist der elektrische Steckverbinder 5 ein Kontaktelement 9 auf, das als ein Kontaktelement mit einer planaren Kontaktfläche 10 ausgebildet ist. Das Kontaktelement 9 ist innerhalb eines elektrisch isolierenden Gehäuses 11 des Steckverbinders 5 angeordnet. In der Darstellung der Fig. 2A ist nur der Gehäusegrundkörper 11₁ des Gehäuses 11 dargestellt. Insbesondere aus Fig. 2D geht ein Gehäuse 11 mit einem Gehäusegrundkörper 11₁ und einen Gehäusedeckel 11₂ hervor, welches alle Seitenflächen des metallischen Kontaktelements 9 verdeckt. Somit dient das elektrische isolierende Gehäuse 11 als Berührschutz, insbesondere als einzige Berührschutzkomponente, für das Kontaktelement 9.

Im Kontaktelement 9 ist verbindungsseitig ein Verbindungsbereich 12 ausgebildet, der stoffschlüssig, vorzugsweise über eine Schweißverbindung, mit dem elektrischen Verbindungselement 3 elektrisch und mechanisch verbunden ist. Da das elektrische Verbindungselement 3 in den Darstellungen der Figuren 2A bis 2D jeweils beispielhaft als ein elektrisches Kabel ausgebildet ist, erfolgt der Stoffschluss zwischen dem Kontaktelement 9 des elektrischen Steckverbinders 5 und dem Innenleiter 13 des elektrischen Verbindungselement 3. Der Innenleiter 13 ist vorzugsweise am axialen Ende 6 des elektrischen Verbindungselements 3 starr ausgebildet, indem entweder die Litzen des Innenleiters 13 am axialen Ende 6 des elektrischen Verbindungselements 3 kompaktiert sind oder der Innenleiter 13 über die gesamte Längserstreckung des elektrischen Verbindungselements 3 starr ausgebildet ist. Der Innenleiter 13 ist wie üblich über die restliche Längserstreckung des elektrischen Verbindungselement 3 von einem elektrisch isolierenden Kabelmantel 14 umhüllt.

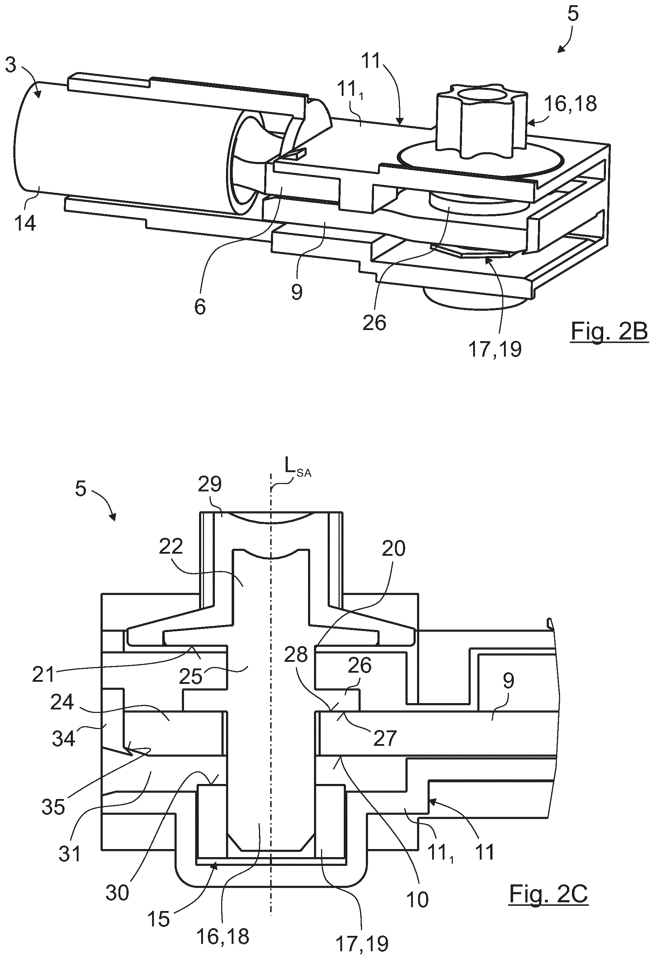

Das Kontaktelement 9 ist im nicht gesteckten Zustand der Steckverbindung 4 durch eine Schraubanordnung 15 im Gehäuse 11 fixiert. Hierzu weist die Schraubanordnung 15 ein Schraubmittel 16 und ein zugehöriges Gegenschraubmittel 17 auf, die miteinander verschraubbar sind. In einer ersten Variante der Schraubanordnung 15 gemäß der Fig. 2A, 2B, 2C, 4B, 4C, 6A, 6B und 6C ist das Schraubmittel 16 als eine metallische Schraube 18 und das Gegenschraubmittel 17 als eine zugehörige metallische Schraubenmutter 19 ausgeführt. Die metallische Schraubenmutter 19 ist innerhalb des Gehäuses 11 angeordnet und somit durch das Gehäuse 11 berührgeschützt. Das als eine Schraubenmutter 19 ausgebildete Gegenschraubmittel 17 ist, wie insbesondere aus Fig. 2B hervorgeht, im Gehäuse 11 fixiert und insbesondere im Gehäuse 11 verdrehsicher angeordnet, indem an der Innenwand des Gehäuses 11 eine Innenkontur ausgebildet ist, die der Außenkontur der Schraubenmutter 19 entspricht.

Das als eine Schraube 18 ausgebildete Schraubmittel 16 ist durch eine seitliche Gehäuseöffnung 20 des Gehäuses 11 seitlich, d. h. in einer zur Richtung der Längsachse L_{ST} des Steckverbinders 5 im Wesentlichen orthogonalen Richtung, in das Gehäuse 11 einführbar (siehe hierzu insbesondere Fig. 2C). Die Schraube 18 stützt sich mit einer Auflagefläche 21 des Schraubenkopfes 22 an einer Außenwand des Gehäuses 11 ab (siehe hierzu Fig. 2C). Die Schraube 18 ist durch eine Durchgangsbohrung 23 des Kontaktelements 9 hindurchgeführt, welche im Kontaktierungsbereich 24 des Kontaktelements 9 im Bereich der Kontaktfläche 10 ausgebildet ist.

Am Schraubenschaft 25 der Schraube 18 ist eine stegförmige Erweiterung 26 ausgebildet, welche sich in einer radialen Richtung zur Längsachse L_{SA} der Schraube 18 in wenigstens einem Winkelsegment, vorzugsweise vollumfänglich, erstreckt. An einer Seitenfläche 27 der stegförmigen Erweiterung 26 der Schraube 18, welche der Schraubenmutter 19 zugewandt ist, liegt das Kontaktelement 9 mit einer Seitenfläche 28 an, welche der Kontaktfläche 10 des Kontaktelements 9 gegenüberliegt. Auf diese Weise kann das Kontaktelement 9 im nicht gesteckten Zustand der Steckverbindung 4 im Gehäuse 11 des Steckverbinders 5 geklemmt und somit fixiert werden. Die Außenfläche des Schraubenkopfes 22 der Schraube 18, die im verschraubten Zustand mit der Schraubenmutter 19 aus dem Gehäuse 11 des Steckverbinders 5 herausragt, ist mit einer elektrischen Isolierung 29 bedeckt. Die elektrische Isolierung 29 ist vorzugsweise als eine elektrisch isolierende Beschichtung auf der Außenfläche des Schraubenkopfes 22 oder als eine elektrisch isolierende Kappe, welche an der Außenfläche des Schraubenkopfes 22 aufgesetzt ist, verwirklicht.

Zwischen der Kontaktfläche 10 des Kontaktelements 9 und einer Seitenfläche 30 der Schraubenmutter 19, welche dem Kontaktelement 9 zugewandt ist, ist ein Steckplatz 31 für ein Gegenkontaktelement 32 des Gegensteckverbinders 7 innerhalb des Gehäuses 11 vorgesehen.

Aus der Längsschnittdarstellung der Fig. 2C ist ein Abstandsmittel 34 als ein Bereich des Gehäuses 11 zu erkennen, an welchem eine Auflagefläche 35 ausgebildet ist, an der das Kontaktelement 9 im nicht gesteckten Zustand der Steckverbindung 4 aufliegt, um einen Steckplatz 31 für das Gegenkontaktelement 32 zu verwirklichen.

In Fig. 2D ist ein Steckverbinder 5 mit einem daran befestigten elektrischen Verbindungselement 3 dargestellt. Am Gehäusegrundkörper 11₁ des Gehäuses 11 des Steckverbinders 5 ist ein zugehöriger Gehäusedeckel 11₂ mittels einer Rastverbindung befestigt und somit das Gehäuse 11 geschlossen. Steckseitig ist am Gehäuse 11 eine steckseitige Gehäuseöffnung 36 zum Stecken des Gegenkontaktelements 32 des Gegensteckverbinders 7 ausgebildet. Verbindungseitig ist im Gehäuse 11 eine verbindungseitige Gehäuseöffnung 37 zum Hindurchführen des elektrischen Verbindungselements 3 ausgebildet (siehe hierzu Fig. 2A).

Im Gegenkontaktelement 32 des Gegensteckverbinders 7 in Fig. 3A sind zwei Gegenkontaktierungsbereiche 33 ausgebildet, welche jeweils mit einem Kontaktierungsbereich 24 des Kontaktelements 9 eines jeweiligen Steckverbinders 5 elektrisch und mechanisch verbindbar sind. Jeder Gegenkontaktierungsbereich 33 ist jeweils gabelförmig mit einer Durchführung 38 ausgebildet, welche sich als eine längliche Ausnehmung von einem axialen Ende 39 des Gegenkontaktelements 32 in einer Steckrichtung S des jeweils zugehörigen Steckverbinders 5 erstreckt. Ein dritter Gegenkontaktierungsbereich 40 des Gegenkontaktelements 32 ist mit einem zugehörigen Kontaktbereich des Batteriezellenmoduls 2 elektrisch und mechanisch verbunden.

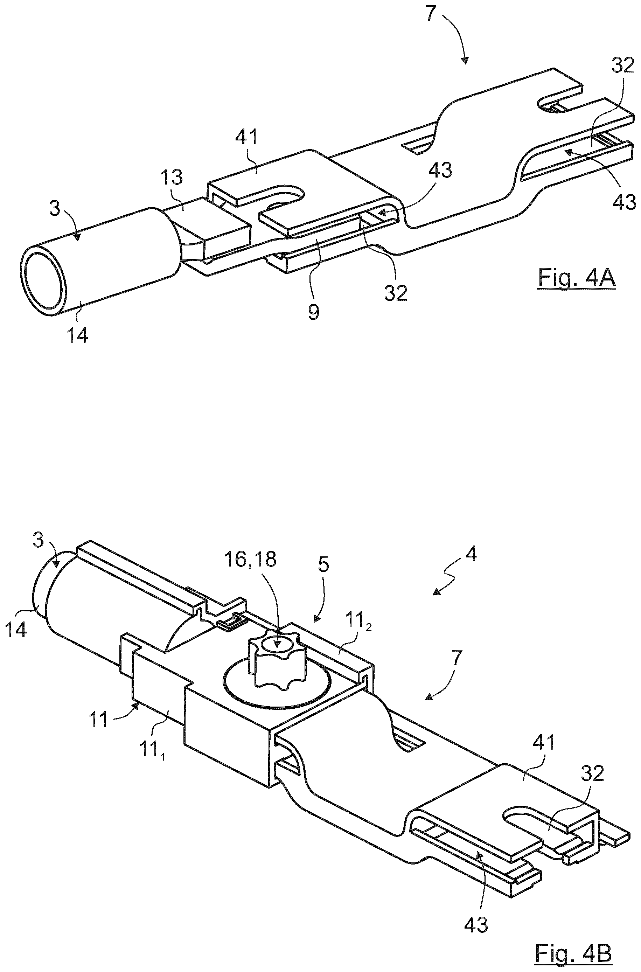

Aus Fig. 3B geht ein elektrischer Gegensteckverbinder 7 der elektrischen Steckverbindung 4 hervor, in dem die einzelnen Seitenwände des Gegenkontaktelements 32 jeweils von einem elektrisch isolierenden Verkleidungselement 41 zumindest verdeckt und teilweise sogar bedeckt sind. Die elektrisch isolierenden Verkleidungselemente 41 sind jeweils einteilig miteinander verbunden und bilden das Gehäuse des Gegensteckverbinders 7, das als ein Berührschutz für das Gegenkontaktelement 32 dient. Das elektrische isolierende Verkleidungselement 41, welches der Gegenkontaktfläche 42 des Gegenkontaktelements 32 zugewandt angeordnet ist, ist im Bereich des Gegenkontaktierungsbereichs 33 des Gegenkontaktelements 32 beabstandet zur Gegenkontaktfläche 42 des Gegenkontaktelements 32 angeordnet. Auf diese Weise lässt sich im Gegensteckverbinder 7 ein Steckplatz 43 für das Kontaktelement 9 des Steckverbinders 5 im gesteckten Zustand der Steckverbindung 4 bilden, wie in Fig. 4A dargestellt ist.

Die beiden elektrisch isolierenden Verkleidungselemente 41 im Gegenkontaktierungsbereich 33 des Gegenkontaktelements 32 sind jeweils gabelförmig ausgebildet und weisen jeweils eine Durchführung 44 auf, die sich als eine längliche Ausnehmung vom axialen Ende 45 des jeweiligen elektrisch isolierenden Verkleidungselements 41 in der Steckrichtung S des jeweiligen Steckverbinders 5 erstreckt. Die Durchführung 44 des elektrisch isolierenden Verkleidungselements 41, welches der Gegenkontaktfläche 42 des Gegenkontaktelements 32 zugewandt angeordnet ist, kann somit im Steckvorgang und im gesteckten Zustand den Schraubenschaft 25 der Schraube 18 umgreifen (siehe hierzu die Fig. 2A und 2C). Äquivalent kann die Durchführung 44 des elektrischen isolierenden Verkleidungselements 41, welches der Gegenkontaktfläche 42 des Gegenkontaktelements 32 abgewandt angeordnet ist, im Steckvorgang und im gesteckten Zustand die Schraubenmutter 19 umgreifen.

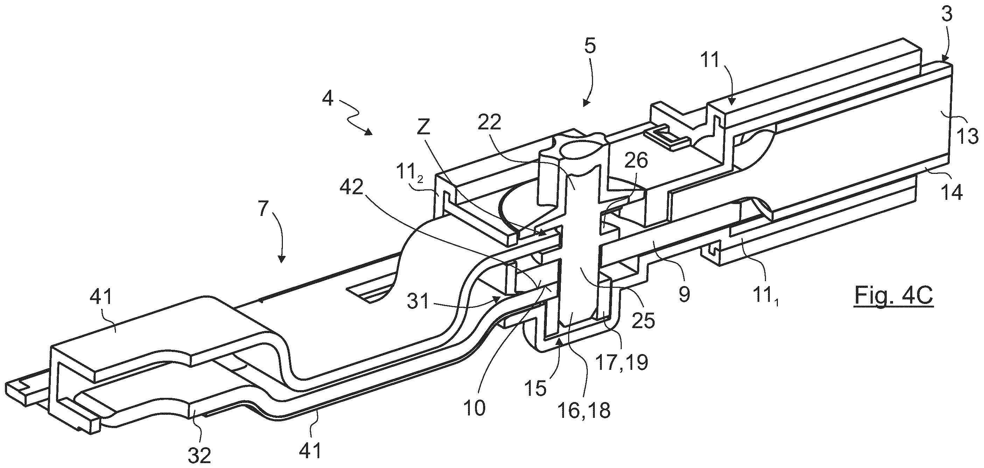

In der isometrischen Darstellung der Fig. 4B und in der perspektivischen Längsschnittdarstellung der Fig. 4C ist eine elektrische Steckverbindung 4 zwischen einem elektrischen Steckverbinder 5 und einem zugehörigen elektrischen Gegensteckverbinder 7 dargestellt:
Wie aus Fig. 4C hervorgeht, ist das Gegenkontaktelement 32 des Gegensteckverbinders 7 im Steckplatz 31 zwischen dem Kontaktelement 9 und der Schraubenmutter 19 im Steckverbinder 5 eingefügt. Die Schraubanordnung 15 aus dem als eine Schraube 18 ausgebildeten Schraubmittel 16 und dem als eine Schraubenmutter 19 ausgebildeten Gegenschraubmittel 17 verklemmt das Kontaktelement 9 und das Gegenkontaktelement 32 zwischen der stegförmigen Erweiterung 26 am Schraubenschaft 25 der Schraube 18 und der Schraubenmutter 19. Somit kommt es zwischen der Kontaktfläche 10 des Kontaktelements 9 und der Gegenkontaktfläche 42 des Gegenkontaktelements 32 zu einem sicheren elektrischen Kontakt. Das elektrisch isolierende Verkleidungselement 41 des Gegensteckverbinders 7, welches der Gegenkontaktfläche 42 des Gegenkontaktelements 32 zugewandt und davon beabstandet angeordnet ist, ist im Steckverbinder 5 in einem Zwischenraum Z zwischen dem Schraubenkopf 22 und der stegförmigen Erweiterung 26 der Schraube 18 eingefügt und angeordnet.

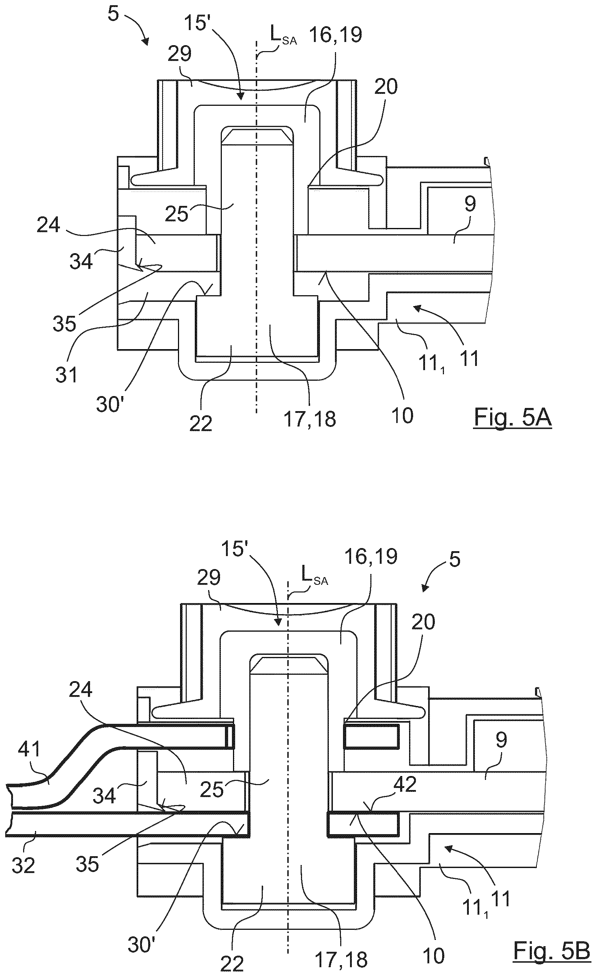

In den Fig. 5A und 5B ist jeweils ein elektrischer Steckverbinder 5 mit einer weiteren Variante einer Schraubanordnung 15' im nicht gesteckten Zustand und im gesteckten Zustand in einer perspektivische Längsschnittdarstellung dargestellt:
Bei der weiteren Variante der Schraubanordnung 15' ist das Schraubmittel 16 als eine metallische Schraubenmutter 19, welche in das Gehäuse 11 des elektrischen Steckverbinders 5 einführbar ist, und das Gegenschraubmittel 17 als eine zugehörige metallische Schraube 18 ausgeführt, die bereits im Gehäuse angeordnet ist. Die als Gegenschraubmittel 7 ausgebildete metallische Schraube 18 ist im Gehäuse fixiert, insbesondere verdrehsicher fixiert, angeordnet. Zwischen der Kontaktfläche 10 des Kontaktelements 9 und einer Seitenfläche 30' des Schraubenkopfes 22 der Schraube 18 ist ein Steckplatz 31 zum Einfügen des Gegenkontaktelements 32 des Gegensteckverbinders 7 vorgesehen.

Die innerhalb des Gehäuses 11 angeordnete metallische Schraube 18 benötigt somit keinen Berührschutz. Die in das Gehäuse einführbare Schraubenmutter 19 weist Flächenbereiche auf, die auch im gesteckten Zustand der Schraubenmutter 19 aus dem Gehäuse 11 herausragen. Die aus dem Gehäuse 11 herausragenden Flächenbereiche der Schraubenmutter 19 sind mit einer elektrischen Isolierung 29 bedeckt. Die elektrische Isolierung 29 ist vorzugsweise als eine elektrisch isolierende Beschichtung auf den Außenflächenbereichen der Schraubenmutter 19 oder als eine elektrisch isolierende Kappe, welche an den Außenflächenbereichen der Schraubenmutter 19 aufgesetzt ist, verwirklicht.

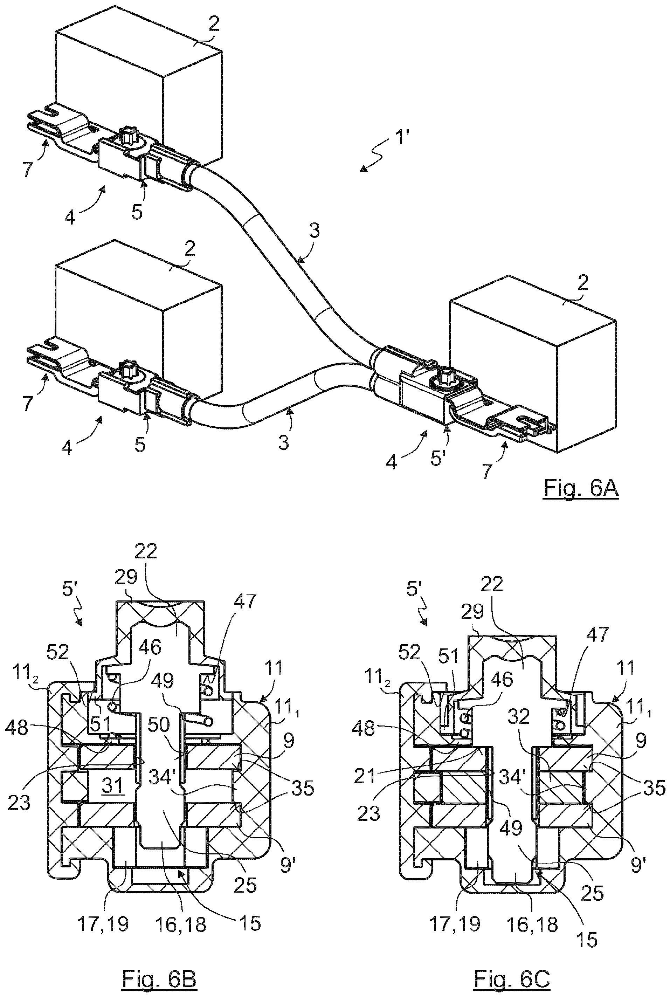

In Fig. 6A ist eine weitere elektrische Verbindungsanordnung 1' zwischen den Batteriezellenmodulen 2 einer elektrischen Batterie dargestellt. Hierbei ist ein Batteriezellenmodul 2 über eine weitere Ausprägung des elektrischen Steckverbinder 5' parallel mit zwei Batteriezellenmodulen 2 elektrisch und mechanisch verbunden. Die weitere Ausprägung des elektrischen Steckverbinders 5' ist verbindungseitig mit zwei elektrischen Verbindungselementen 3 verbunden, welche jeweils in der Darstellung der Fig. 5A als ein elektrisches Kabel ausgebildet sind.

In der weiteren Ausprägung des elektrischen Steckverbinders 5' ist hierfür innerhalb des Gehäuses 11 neben dem Kontaktelement 9 ein weiteres Kontaktelement 9' angeordnet, wie in der Darstellung eines nicht gesteckten Steckverbinders 5' gemäß Fig. 5B und eines gesteckten Steckverbinders 5' gemäß Fig. 5C zu entnehmen ist. In den Darstellungen der Fig. 5B und 5C ist beispielsweise das Kontaktelement 9 nächst benachbart zum Schraubenkopf 22 des als eine Schraube 18 ausgebildeten Schraubmittels 16 und das weitere Kontaktelement 9' nächst benachbart zum als eine Schraubenmutter 19 ausgebildeten Gegenschraubmittel 17 angeordnet. Zwischen dem Kontaktelement 9 und dem weiteren Kontaktelement 9' ist im gesteckten Zustand der weiteren Ausprägung des Steckverbinders 5' das einzige Gegenkontaktelement 32 angeordnet und eingeklemmt. Somit findet ein elektrischer und mechanischer Kontakt zwischen dem Gegenkontaktelement 32 und dem Kontaktelement 9 bzw. dem weiteren Kontaktelement 9' statt.

Um das Gegenkontaktelement 32 des Gegensteckverbinders 7 in den Steckplatz 31 der weiteren Ausprägung des Steckverbinders 5' einfügen zu können, ist im Gehäuse 11, insbesondere im Gehäusegrundkörper 11₁, ein Abstandsmittel 34' mit zwei Abstützflächen 35 ausgebildet, an denen sich das Kontaktelement 9 und das weitere Kontaktelement 9' abstützen und somit ein Versperren des Steckplatzes 31 durch das Kontaktelement 9 und/oder das weitere Kontaktelement 9' verhindert ist.

Damit die metallische Auflagefläche 21 des Schraubenkopfes 22 der Schraube 18 im nicht gesteckten Zustand der weiteren Ausprägung des Steckverbinders 5' nicht das Kontaktelement 9 kontaktiert und somit ein am Kontaktelement 9 anliegendes elektrisches Potenzial über den Schraubenkopf 22 und den Schraubenschaft 25 auf das weitere Kontaktelement 9' übertragen wird, ist zwischen dem Schraubenkopf 22 und dem Kontaktelement 9 eine Feder 46 angeordnet. Die Feder 46 stützt sich insbesondere an einer weiteren Auflagefläche 47 des Schraubenkopfes 22 ab, welche radial nach außen versetzt und axial zurückversetzt zur Auflagefläche 21 am Schraubenkopf 22 ausgebildet ist. Die Feder 46 stützt sich außerdem insbesondere an einem Bereich 48 des elektrisch isolierenden Gehäuses 11, insbesondere des Gehäusegrundkörpers 11₁, ab, welcher eine dem Schraubenkopf 22 zugewandte Fläche des Kontaktelements 9 zumindest teilweise bedeckt. Die Feder 46, welche typischerweise metallisch ausgebildet ist, beabstandet im nicht gesteckten Zustand der weiteren Ausprägung des Steckverbinders 5' und im nicht verschraubten Zustand der Schraubanordnung 15 die Auflagefläche 21 des Schraubenkopfes 22 vom Kontaktelements 9. Im gesteckten Zustand der weiteren Ausprägung des Steckverbinders 5' und im verschraubten Zustand der Schraubanordnung 15 ist die Federkraft der Feder 46 derart überwunden, dass die Auflagefläche 21 des Schraubenkopfes 22 das Kontaktelement 9 kontaktiert und somit eine mechanisch stabile Verschraubung verwirklicht ist.

Am Schraubenschaft 25 der Schraube 18 ist ein elektrisch isolierendes und vorzugsweise hülsenförmig geformtes Element 49 fixiert, welches eine elektrische Kontaktierung zwischen dem Schraubenschaft 25 und einer Innenwand 50 der Durchführung, vorzugsweise einer Durchgangsbohrung 23, des Kontaktelements 9 im Fügeprozess der Schraube 18 oder im nicht verschraubten Zustand der Schraubenanordnung 15 verhindert. Alternativ kann das elektrisch isolierende und vorzugsweise hülsenförmig geformte Element 49 auch am Kontaktelement 9 fixiert sein.

An der elektrischen Isolierung 29 des Schraubenkopfes 22, welche vorzugsweise als ein kappenförmiges Element ausgeformt ist, ist ein radial nach außen gerichteten Steg 51 ausgebildet, welcher an einer Innenwand 52 des Gehäuses 11, insbesondere des Gehäusedeckels 11₂, anschlägt und somit im Gehäuse 11 gefangen gehalten ist. Auf diese Weise ist eine verliersichere Befestigung der Schraube 18 insbesondere im nicht verschraubten Zustand der Schraubanordnung 15 an der weiteren Ausprägung des Steckverbinders 5' realisiert.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar.

## Patentansprüche

1. Elektrischer Steckverbinder (5; 5') zum elektrischen und mechanischen Verbinden mit einem zugehörigen elektrischen Gegensteckverbinder (7) aufweisend ein elektrisch isolierendes Gehäuse (11), ein Kontaktelement (9) und eine Befestigungsanordnung zur Befestigung des Kontaktelements (9) mit einem Gegenkontaktelement (32) des Gegensteckverbinders (7), wobei die Befestigungsanordnung als eine Schraubanordnung (15; 15') ausgebildet ist, um das Kontaktelement (9) mit dem Gegenkontaktelement (32) in einer Schraubrichtung zu befestigen, die winklig, vorzugsweise orthogonal, zu einer Steckrichtung des Steckverbinders (5; 5') gerichtet ist, wobei die Schraubanordnung (15; 15") ein Schraubmittel (16), welches in das Gehäuse (11) in der Schraubrichtung einführbar ist, und ein im Gehäuse (11) angeordnetes und mit dem Schraubmittel (16) verschraubbares Gegenschraubmittel (17) aufweist.

2. Elektrischer Steckverbinder (5; 5') nach Patentanspruch 1,
**dadurch gekennzeichnet,**
**dass** das Kontaktelement (9) steckseitig einen Kontaktierungsbereich (24) zur Kontaktierung mit dem Gegenkontaktelement (32) aufweist, in dem eine planare Kontaktfläche (10) ausgebildet ist, um eine planare Gegenkontaktfläche (42) des Gegenkontaktelements (32) zu kontaktieren.

3. Elektrischer Steckverbinder (5; 5') nach Patentanspruch 2,
**dadurch gekennzeichnet,**
**dass** im Kontaktierungsbereich (24) eine Durchführung, vorzugsweise eine Durchgangsbohrung (23), ausgebildet ist, durch die ein Schraubenschaft (25) des als eine Schraube (18) ausgebildeten Schraubmittels (16) oder des als eine Schraube (18) ausgebildeten Gegenschraubmittels (17) durchgeführt ist.

4. Elektrischer Steckverbinder (5; 5') nach einem der Patentansprüche 1 bis 3,
**dadurch gekennzeichnet,**
**dass** in einem axialen Abschnitt eines Schraubenschaftes (25) der Schraube (18) in einer zu einer Längsachse (L_{SA}) der Schraube (18) radialen Richtung eine stegförmige Erweiterung (26) ausgebildet ist, welche sich in einer Umfangrichtung des Schraubenschaftes (25) wenigstens in einem Winkelsegment, vorzugsweise vollumfänglich, erstreckt, zwischen welcher und der Schraubenmutter (19) das Kontaktelement (9) und das Gegenkontaktelement (32) einklemmbar ist.

5. Elektrischer Steckverbinder (5; 5') nach einem der Patentansprüche 1 bis 4,
**dadurch gekennzeichnet,**
**dass** das Gegenschraubmittel (17) verdrehsicher, vorzugsweise mittels einer formschlüssigen Verbindung mit dem Gehäuse (11), im Gehäuse (11) angeordnet ist.

6. Elektrischer Steckverbinder (5; 5') nach einem der Patentansprüche 1 bis 5,
**dadurch gekennzeichnet,**
**dass** das Gehäuse (11) zweiteilig, vorzugsweise aus einem Gehäusegrundkörper (11₁) und einem Gehäusedeckel (11₂) ausgebildet ist.

7. Elektrischer Steckverbinder (5; 5') nach einem der Patentansprüche 1 bis 6,
**dadurch gekennzeichnet,**
**dass** ein Abstandsmittel (34) mit einer Auflagefläche (35), vorzugsweise eine an einer Innenwand des Gehäuses (11) ausgebildeten Auflagefläche (35), ausgebildet ist, auf der das Kontaktelement (9) in einem nicht gesteckten Zustand mit dem Gegenkontaktelement (32) aufliegt, um im Gehäuse (11) einen Steckplatz (31) zum Stecken des Gegenkontaktelement (32) vorzuhalten.

8. Elektrischer Steckverbinder (5; 5') nach einem der Patentansprüche 1 bis 7,
**dadurch gekennzeichnet,**
**dass** das Kontaktelement (9) verbindungsseitig einen Verbindungsbereich (12) zum Verbinden, vorzugsweise zum stoffschlüssigen Verbinden, mit einem elektrischen Verbindungselement (3), vorzugsweise einem elektrischen Kabel oder einer Stromschiene, aufweist.

9. Elektrischer Steckverbinder (5; 5') nach einem der Patentansprüche 1 bis 8,
**dadurch gekennzeichnet,**
**dass** das Gehäuse (11) eine verbindungsseitige Gehäuseöffnung (37) zum Durchführen eines elektrischen Verbindungselements (3), vorzugsweise eines elektrischen Kabels oder einer Stromschiene, aufweist.

10. Elektrischer Steckverbinder (5; 5') nach einem der Patentansprüche 1 bis 9,
**dadurch gekennzeichnet,**
**dass** der Steckverbinder (5; 5') vorzugsweise als ein Hochstromsteckverbinder, besonders vorzugsweise als ein Batteriezellenmodulsteckverbinder zum elektrischen und mechanischen Verbinden mit einem Batteriezellenmodulgegensteckverbinder eines Batteriezellenmoduls einer elektrischen Batterie, ausgebildet ist.

11. Elektrischer Steckverbinder (5, 5') nach einem der Patentansprüche 1 bis 10,
**gekennzeichnet**
**durch** ein weiteres Kontaktelement (9'), wobei das Gegenkontaktelement (32) zwischen dem Kontaktelement (9) und dem weiteren Kontaktelement (9') innerhalb der Schraubanordnung (15) eingeklemmt ist.

12. Elektrische Steckverbindung (4) aufweisend einen elektrischen Steckverbinder (5; 5') gemäß einem der Patentansprüche 1 bis 11 und den zugehörigen elektrischen Gegensteckverbinder (7).

13. Elektrische Steckverbindung (4) nach Patentanspruch 12, **dadurch gekennzeichnet,**
**dass** das Gegenkontaktelement (32) gabelförmig mit einer Durchführung (38) ausgebildet ist, durch die in einem gesteckten Zustand des Kontaktelements (9) und des Gegenkontaktelements (32) der Schraubenschaft (25) der Schraube (18) durchgeführt ist.

14. Elektrische Steckverbindung (4) nach Patentanspruch 12 oder 13,
**dadurch gekennzeichnet,**
**dass** das Gegenkontaktelement (32) auf einer Seite, welche einer Gegenkontaktfläche (42) des Gegenkontaktelements (32) zugewandt ist, und auf einer Seite, welche der Gegenkontaktfläche (42) des Gegenkontaktelements (32) abgewandt ist, jeweils von einem elektrisch isolierenden Verkleidungselement (41) verdeckt ist.

15. Elektrische Steckverbinderanordnung (8) aufweisend ein elektrisches Verbindungselement (3), vorzugsweise ein elektrisches Kabel oder eine Stromschiene, und zwei elektrische Steckverbinder (5; 5'), wobei jeder Steckverbinder (5; 5') jeweils mit einem axialen Ende (6) des Verbindungselements (3) elektrisch und mechanisch verbunden ist, wobei wenigstens ein Steckverbinder (5; 5'), vorzugsweise beide Steckverbinder (5; 5'), jeweils als ein elektrischer Steckverbinder (5; 5') gemäß einem der Patentansprüche 1 bis 11 ausgebildet ist.
